(19) Europäisches Patentamt
European Patent Office
Office européen des brevets

(11) EP 1 168 347 A2

(12) EUROPEAN PATENT APPLICATION

(43) Date of publication:
02.01.2002 Bulletin 2002/01

(51) Int Cl.7: G11B 27/32, G11B 27/34, H04N 5/781

(21) Application number: 01115402.8

(22) Date of filing: 26.06.2001

(84) Designated Contracting States:
AT BE CH CY DE DK ES FI FR GB GR IE IT LI LU MC NL PT SE TR
Designated Extension States:
AL LT LV MK RO SI

(30) Priority: 26.06.2000 JP 2000190900

(71) Applicant: MATSUSHITA ELECTRIC INDUSTRIAL CO., LTD.
Kadoma-shi, Osaka-fu (JP)

(72) Inventors:
• Hatae, Eiichi
Fukuoka-shi, Fukuoka-ken 819-0015 (JP)

• Asada, Shin, c/o Progressive Pictures Co., Ltd.
Tokyo-to 140-0002 (JP)
• Fukuda, Hideki
Nara-shi, Nara-ken 631-0843 (JP)
• Nakamura, Kazuhiko
Hirakata-shi, Osaka-fu 573-0084 (JP)

(74) Representative:
Grünecker, Kinkeldey, Stockmair & Schwanhäusser Anwaltssozietät
Maximilianstrasse 58
80538 München (DE)

(54) **Remaining recordable time calculation apparatus that converts amount of free area of recording medium into time**

(57) To provide users with reliable remaining recordable time of a recording medium, calculation for the remaining recordable time is performed by dividing a free area size of the recording medium by a standard bit rate used for compressing video streams, where the free area size is obtained by subtracting an amount of already recorded stream data in the recording medium and an estimate error value from a capacity of the recording medium.

FIG. 1

OPERATIONAL APPARATUS SUCH AS KEY BOARD

DISPLAY 5

USER INSTRUCTION RECEIVING UNIT 16

DISPLAY CONTROL UNIT 13

STORAGE UNIT 17

CPU 121

MEMORY 122

TIME CALCULATION UNIT 12

STREAM REPRODUCING UNIT 14

COMPRESSION UNIT 15

VIDEO DATA

DATA READ /WRITE UNIT 11

6

REMAINING RECORDABLE TIME CALCULATION APPARATUS 1

EP 1 168 347 A2

Printed by Jouve, 75001 PARIS (FR)

## Description

BACKGROUND OF THE INVENTION

(1) Field of the Invention

The present invention relates to a remaining recordable time calculation apparatus that can calculate a time period for which video streams can still be recorded on a recording medium, based on the use state of the recording medium.

(2) Related Art

These days, as media for recording video streams, random access recording media, such as optical disks or hard disks, are replacing tape media. To meet the need of this type of recording media, apparatuses for recording video stream data using a data compression method have started to be commercialized.

Conventionally, free (unallocated) area of optical disks has been indicated in a unit such as bit or byte since optical disks have mainly been used for storing software or character image data. However, when an optical disk stores such data as can be expressed in a unit of time (e.g. video streams), the recording apparatus needs to show the free area of the optical disk in the unit of time converted from a unit of data amount.

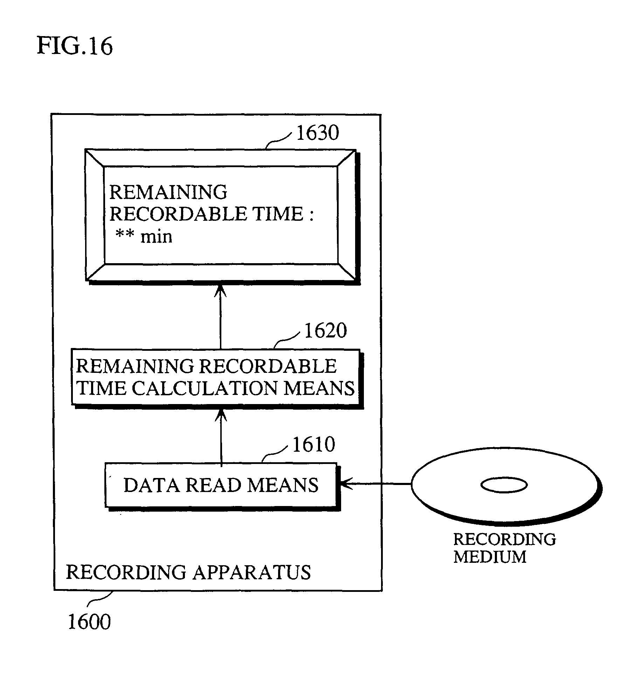

Fig. 16 shows a conventional recording apparatus 1600 which uses a data compression method in recording video streams on recording media such as optical disks. It includes the following components relating to its display function of free area: a reading unit 1610 which reads out information on the free area expressed in units of bytes from the recording media; a remaining recordable time calculation unit 1620 that converts the unit of the amount of free area from bytes to time; and a display unit 1630 that displays the amount of free area converted into time (hereinafter referred to as 'remaining recordable time'). Specifically, remaining recordable time is obtained in the remaining recordable time calculation unit 1620 by dividing the free area by a compression bit rate, where the free area is obtained by subtracting the total size of recorded data from the capacity of the recording medium, where the capacity is the size of an area in the recording medium assigned for recording of video streams.

Unfortunately, with the conventional recording apparatus 1600, the calculated remaining recordable time is not always reliable and it can happen that, for example, you can only record 29 minutes although the displayed remaining recordable time is 30 minutes. There are two possible reasons for this inconsistency; the first reason is that the compression bit rate is an estimate, thereby generates a difference (hereinafter referred to as "fluctuation") between the estimated amount of data calculated from running time of video streams using the bit rate and the actual data amount of the video stream after compression. The second reason is "unwritable" area in the recording medium that is generated due to the fragmentation of storage area during storing, which is not incorporated in the free area which the calculation is based on.

Also with the conventional recording apparatus 1600, the display unit simply shows the remaining recordable time. Accordingly, users cannot recognize the ratio of an already allocated area to the capacity of the medium. Furthermore, the conventional recording apparatus 1600 does not display the amount of allocated space, or its running time for each stream. Therefore, users attempting to enlarge the unallocated space (i.e. to increase the remaining recordable time) will find it difficult to select which streams to be deleted.

SUMMARY OF THE INVENTION

The first object of the present invention, in view of the stated problems, is to provide a most reliable apparatus for converting an amount of free area of a recording medium such as an optical disk into the remaining recordable time.

The second object of the present invention is to provide a remaining recordable time calculation apparatus that enables users to grasp remaining recordable time more easily.

The first object of the present invention is achieved by a remaining recordable time calculation apparatus which includes: a management data read unit for reading a capacity of a recording medium and data sizes of the one or more video streams; calculation parameter holding unit for holding the following calculation parameters, (1) an estimate error value for estimating at least one of: an estimate error occurring during compression of a video stream, and a size of an unrecordable area inherent in the recording medium, (2) a standard bit rate being a bit rate used in compressing a video stream to be recorded on the recording medium; and a time calculation unit for calculating the remaining recordable time by dividing a free area size of the recording medium by the standard bit rate, where the free area size is obtained by subtracting the data sizes of the one or more video streams and the estimate error value from the capacity of the recording medium.

This apparatus is structured to take into account an estimate error value when converting free area size of a recording medium into remaining recordable time. Accordingly, the displayed time period for which video streams can be recorded on an optical disk is guaranteed at the time of calculation.

The first object can also be achieved by a remaining recordable time calculation apparatus which includes: a management data read unit for reading, from a recording medium, running time of the one or more video streams; a total time holding unit for holding a total time period for which recording is possible on a recording medium, (hereinafter referred to as 'a total time'), the total time being obtained by first subtracting an estimate error value from a capacity of the recording medium, and then by dividing the subtraction result by a standard bit rate, wherein an estimate error value estimating at least one of: an estimate error occurring during compression of a video stream, and a size of an unrecordable area inherent in the recording medium, and the standard bit rate is a bit rate used in compressing a video stream to be recorded on the recording medium; and a time calculation unit for calculating the remaining recordable time by subtracting the running time of the one or more video streams from the total time.

This structure enables to obtain remaining recordable time using running time of video streams.

The first object can also be achieved by a remaining recordable time calculation apparatus which includes: a management data read unit for reading, from a recording medium, a capacity of the recording medium and data sizes and running time of the one or more video streams; calculation parameter holding unit for holding the following calculation parameters, (1) an estimate error value estimating at least one of: an estimate error occurring during compression of a video stream, and a size of an unrecordable area inherent in the recording medium, (2) a standard bit rate being a bit rate used in compressing a video stream to be recorded on the recording medium; a total time holding unit for holding a total time of the recording medium, where the total time is obtained by first subtracting the estimate error value from the capacity of the recording medium and then by dividing the subtracted result by the standard bit rate; a first time calculation unit for calculating first remaining recordable time by dividing a free area size of a recording medium by the standard bit rate, where the free area size is obtained by subtracting the data sizes and the estimate error value from the capacity of the recording medium; a second time calculation unit for calculating second remaining recordable time by subtracting the running time from the total time; and a select unit for selecting a shorter one of the first and the second remaining recordable time, so as to present the shorter time as the remaining recordable time to users.

This apparatus is structured to perform two kinds of calculations for remaining recordable time, so as to obtain shorter recording time of the two calculation results. Therefore the structure enables to show users more reliable remaining recordable time.

In order to achieve the second object of the present invention, the remaining recordable time calculation apparatus may further include a display unit for displaying the remaining recordable time selected by the select unit, wherein the display unit displays either a ratio of the free area size to the capacity of the recording medium, or a ratio of the remaining recordable time to the total time, in a graphical form.

This structure enables graphical representations of a ratio of remaining recordable time.

Furthermore, the remaining recordable time calculation apparatus may include an instruction receiving unit for receiving a user selection of a video stream out of the one or more video streams, and a display unit for displaying the remaining recordable time selected by the select unit, wherein the display unit displays either a ratio of a compressed data size of the selected video stream to the capacity of the recording medium, or a ratio of a running time of the selected video stream to the total time, in a graphical form.

This structure enables users to have a graphical grasp of a data amount or a running time of a video stream stored in a recording medium or that expressed in units of time, when the users are attempting to delete the video stream to increase the free area.

Furthermore, the remaining recordable time calculation apparatus may include a stream decoding unit for decoding a compressed data of the video stream, wherein the display unit further displays an image of the video stream decoded from the stream decoding unit.

This structure enables to show users contents of a video stream, when they are attempting to delete the video stream after checking remaining recordable time.

Furthermore, the management data read unit may read compression bit rates recorded in one to one relation with the running time of each of the one or more video streams, and that the time calculation unit may obtain remaining recordable time by subtracting adjusted running time of each of the one or more video streams from the total time, the adjusted running time being adjusted according to a ratio of the compression bit rates to the standard bit rate.

This structure enables calculation of remaining recordable time using running time stored on a recording medium, even for whose recording apparatus is installed several bit rates for compression of video streams, using such functions as recording mode switching functions.

Furthermore, the remaining recordable time calculation apparatus may include a management data write unit for writing running time, a corresponding compression bit rate, and a data size of a video stream to be added, and the capacity of the recording medium to the recording medium as the management data, wherein the management data read unit reads out the running time, the corresponding compression bit rate, and the data size of the video stream to be added, and capacity of the recording medium, written by the management data write unit.

This structure enables calculation of more accurate remaining recordable time since it bases the calculation of remaining recordable time on information that the remaining recordable time calculation apparatus itself writes when recording video streams.

Furthermore, the running time and the data sizes of the one or more video stream, and the capacity of the recording medium may be included in management information generated in accordance with a recording standard of the recording medium.

This structure does not require that the remaining recordable time calculation apparatus write necessary data for calculation of remaining recordable time on a recording medium. Therefore, this structure enables calculation of remaining recordable time for every video stream recorded in accordance with a recording standard of the recording medium.

BRIEF DESCRIPTION OF THE DRAWINGS

These and other objects, advantages and features of the invention will become apparent from the following description thereof taken in conjunction with the accompanying drawings that illustrate a specific embodiment of the invention. In the drawings:

Fig. 1 is a block diagram showing a structure of a remaining recordable time calculation apparatus relating to the first embodiment;
Fig. 2 is a diagram representing compressed stream data and corresponding management data held in an optical disk relating to the first embodiment;
Fig. 3 is a table representing contents of calculation parameters relating to the first embodiment;
Fig. 4 shows a remaining recordable time display screen displayed on a display relating to the first embodiment;
Fig. 5 is a chart showing a flow of remaining recordable time calculation performed by a remaining recordable time calculation apparatus relating to the first embodiment;
Fig. 6 illustrates a structure of a remaining recordable time calculation apparatus relating to the second embodiment of the present invention;
Fig. 7 is a diagram showing compressed stream data and corresponding management data stored in an optical disk relating to the second embodiment;
Fig. 8 shows a remaining recordable time display screen displayed on a display relating to the second embodiment;
Fig. 9 is a chart showing a stream display screen displayed on a display relating to the second embodiment;
Fig. 10 is a chart showing a flow of remaining recordable time calculation performed by a remaining recordable time calculation apparatus relating to the second embodiment;
Fig. 11 shows management data recorded on an optical disk in the variant form of the second embodiment;
Fig. 12 shows an example of storing place and data structure of bit rate information;
Fig. 13 is a block diagram showing a structure of a remaining recordable time calculation apparatus relating to the third embodiment;
Fig. 14 is a diagram showing compressed stream data and corresponding management data recorded in an optical disk relating to the third embodiment;
Fig. 15 is a chart showing a flow of remaining recordable time calculation performed by a remaining recordable time calculation apparatus relating to the third embodiment; and
Fig. 16 shows a structure of a conventional remaining recordable time calculation apparatus.

DESCRIPTION OF THE PREFERRED EMBODIMENTS

The following is a description of preferred embodiments of the present invention, with reference to the drawings. Please note that each embodiment is premised on the use of an optical disk as a recording medium that can be both read from and written on.

1. First Embodiment

The following remaining recordable time calculation apparatus according to the first embodiment of the present invention calculates guaranteed remaining recordable time of video streams, by taking into account both fluctuations that result during compression, and unwritable area on the optical disk. The description begins with the construction and then moves to the operation.

(Construction)

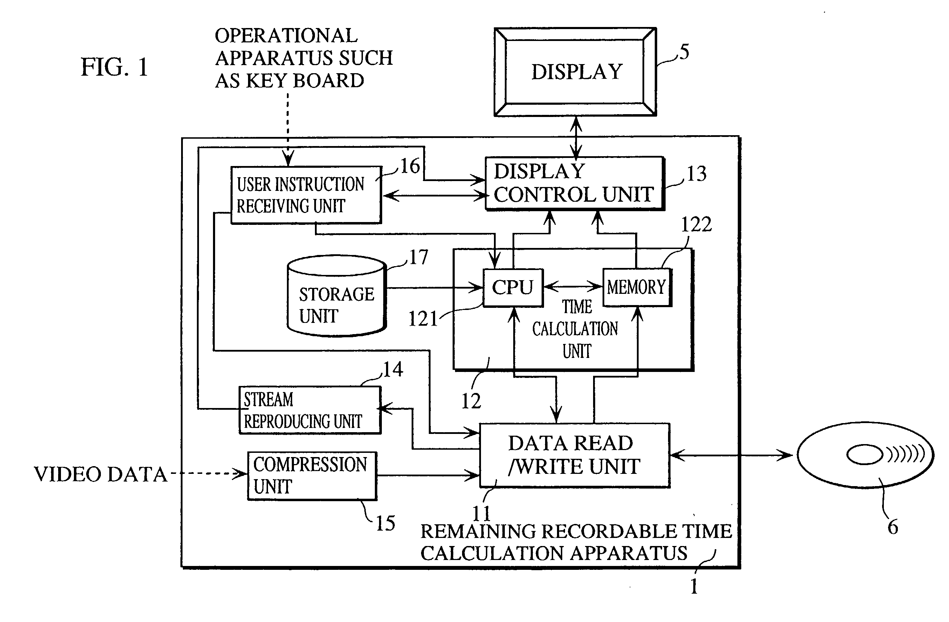

Fig. 1 illustrates a remaining recordable time calculation apparatus 1 and related external apparatuses to this remaining recordable time calculation apparatus 1. The remaining recordable time calculation apparatus 1 is a part of a personal computer equipped with functions for reading data from an optical disk, reproducing the read data, and writing data to the optical disk. The external apparatuses include a display 5 and an optical disk 6, where the display 5 is used to display the calculated remaining recordable time or video streams reproduced from the recorded data on the optical disk, and the optical disk 6 is a recording mediuim that can be both read from and written on.

The remaining recordable time calculation apparatus 1 includes the followings: a data read/write unit 11, a time calculation unit 12, a display control unit 13, a stream reproducing unit 14, a compression unit 15, a user instruction receiving unit 16, and a storage unit 17. The time calculation unit 12 is equipped with a CPU 121 and a memory 122.

The time calculation unit 12 and the display control unit 13 play a major role for the calculation of remaining recordable time. When the optical disk 6 is inserted in the data read/write unit 11 (which is an optical disk driver device) and a user instructs the user instruction receiving unit 16 to display the remaining recordable time, the time calculation unit 12 performs calculation using calculation parameters in the storage unit 17 and the management data stored in the optical disk 6. The calculation result is sent to the display control unit 13, which, in turn, commands the display 5 to show a graphical representation of the result.

See the following for a detailed description relating to the calculation of remaining recordable time with reference to the components.

The data read/write unit 11 is an optical disk driver device and performs both writing of compressed stream data (i.e. compressed video stream data) onto the optical disk 6 and reading of compressed stream data from the optical disk 6. In reading, the data read/write unit 11 reads out the compressed stream data of users' choice and outputs the data to the stream reproducing unit 14. The stream reproducing unit 14, in turn, reproduces the video stream (i.e. image and audio data obtained from television programs or taken through home videos) after decoding the compressed stream data, and orders the display control unit 13 to command the display 5 to display the result. In writing, the data read/write unit 11 writes the compressed stream data sent from the compression unit 15 on the optical disk 6. The compressed stream data sent from the compression unit 15 results from compression, at a given bit rate, of video streams from a connected tuner or input terminals outside Fig. 1.

Also, the data read/write unit 11 writes/reads management data required for a remaining recordable time calculation process on/from the optical disk 6. When writing compressed stream data for the first time in an initialized optical disk 6, the data read/write unit 11 generates a management data file, and writes, in that file, a piece of corresponding management data to the first piece of compressed stream data. After that, each time the data read/write unit 11 writes a piece of compressed stream data, it also creates its corresponding management data and writes it in the optical disk. When deleting existing compressed stream data from the optical disk, the data read/write unit 11 also deletes its corresponding management data from the management data file . When receiving management data reading order from the time calculation unit 12 responding to a user instruction to display remaining recordable time from the user' s instruction receiving unit 16, the data read/write unit 11 reads the content from the management data file on the optical disk, writes the content in a given area in the memory 122 of the time calculation unit 12, and notify the time calculation unit 12 of the completion of writing.

The following is a description of the required data for the remaining recordable time calculation which is written by the data read/write unit 11 to an optical disk.

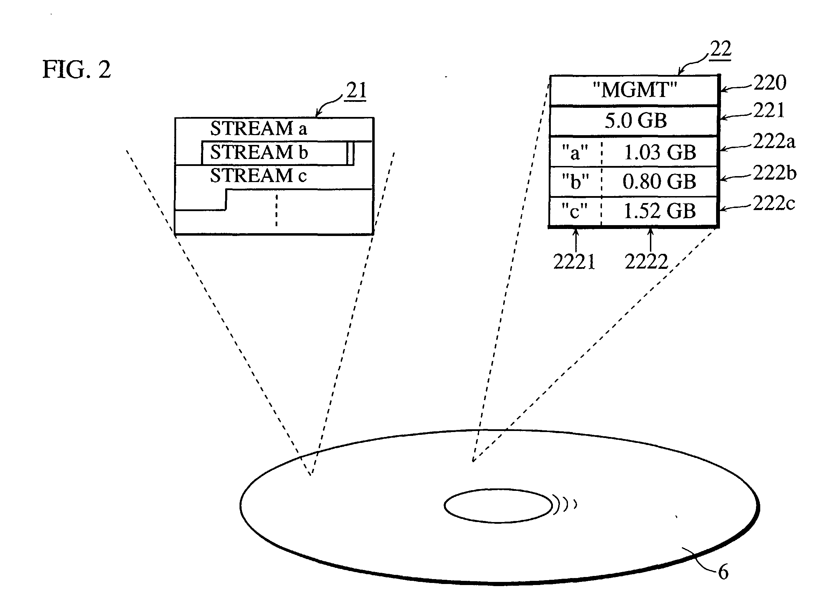

Fig. 2 represents compressed stream data and corresponding management data stored in the optical disk 6. In this optical disk, there are three pieces of compressed stream data a, b, and c (hereinafter referred collectively to as a compressed stream data 21 unless specified individually) and corresponding management data 222a, 222b, 222c respectively (hereinafter referred collectively to as a management data 222). Each piece of the compressed stream data 21 is obtained from compression of a piece of video data comprising of image and audio data obtained from television programs or taken through home videos . The compression unit 15 performs compression in accordance with MPEG (Moving Picture Encoding Group) standard.

The management data file 22 includes, other than the management data 222, identification information 220 (represented as a character-string "MGMT" in this figure) and disk size information 221 which indicates the capacity of the optical disk 6 (which is the total size of area assigned for recording the compressed stream data as expressed in units of gigabytes(GB)). The identification information is generated by the data read/write unit 11 when a management data file is generated. Likewise, the disk size information is generated by the data read/write unit 11 when generating the management data file, by copying the disk capacity information stored in the management information area of the optical disk.

The management data 222 comprises the following two items : a stream ID 2221 which indicates the corresponding compressed stream data; and a data size 2222 which indicates the compressed stream data size (as expressed in units of GB). The information of compressed stream data size is obtained from the compression unit 15.

The management data file 22 is held on the optical disk 6 as a general file. When accessing the management data file 22, the data read/write unit 11 retrieves the management data file 22 by searching for the identification information "MGMT" in the general file area.

The time calculation unit 12 calculates the remaining recordable time by making CPU121 execute a calculation program stored in the memory 122. The memory 122 temporarily stores data which is read during the remaining recordable time calculation process and intermediate results.

The time calculation unit 12 calculates the remaining recordable time using the content of the management data file and calculation parameters. Here, description is confined to the calculation parameters, since the management data file was already explained.

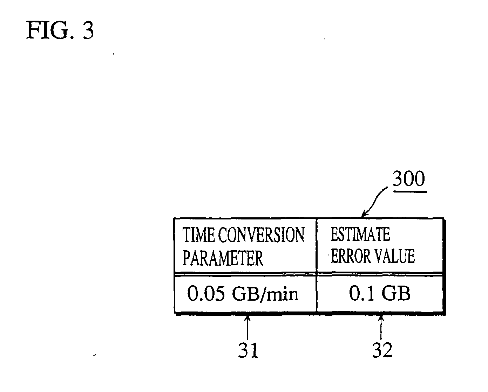

Fig. 3 represents contents of calculation parameters 300 held in the storage unit 17. There are two kinds of calculation parameters; a time conversion parameter 31 and an estimate error value 32. The above parameter information is initially stored in the storage unit 17 at the time of the shipment.

The time conversion parameter 31 signifies the average size of a given length of video stream after compression. It is shown in units of GB/min. Specifically, it shows the amount of GB obtained by compressing a video stream whose running time is one minute, where running time signifies time period for which the video stream is reproduced. Therefore, 0.05GB/min means that a one minute length video stream is compressed to be 0.05GB/min. (That is, a 30 minutes length video stream could be stored as 1.5 GB compressed stream data in an optical disk.) This value is equal to the compression rate of the compression unit 15 (hereinafter referred to as a bit rate). As was already mentioned, however, a bit rate is an estimate and causes error in the actual compression where "1 minute length of video equals 0.05GB" formula is used.

The estimate error value 32 is a value meant for correcting the gap between the estimated remaining recordable time obtained from free area in the disk using the compression bit rate, and the actual remaining recordable time of video stream. There are two thinkable reasons for this gap: a fluctuation occurred during compression and unwritable area in the disk (i.e. fragments in the disk generated due to the fragmentation of recorded data).

A fluctuation, here, is a difference between estimated amount of data calculated from the time length of the video stream to be compressed and the bit rate the compression device uses, and the actual data amount of the compressed stream. The compression device (i.e. the compression unit 15 in this embodiment), although performing compression according to the bit rate, cannot have the estimated result in accordance with the bit rate due to the nature of the video stream(for example, image which has vigorous movements).

The estimate error value 32 (which is 0.1 GB) is set based on internal transactional specifications inside the compression unit 15, test results accumulated during its development process, or information on occurrence frequency and the size of unwritable data area.

The following is a detailed description of the remaining recordable time calculation process, using the management data file and the calculation parameter shown in Fig. 2 and Fig. 3 as an example. The time calculation unit 12, upon receiving from the data read/write means 11 a notification of completion of the writing of management data file content onto the memory 122, reads the calculation parameters 300 from the storage unit 17, and starts calculation.

First, in the calculation, the time calculation unit 12 obtains the size of free area in the optical disk 6, based on the content of the management data file 22. Concretely, it subtracts already recorded compressed stream data size (i.e. the sum of the amount of each piece of compressed stream data shown by the management data 222) from the total capacity of the optical disk 6 which is represented as the disk size information 221. Therefore:

$$5.0-(1.03+0.80+1.52)=1.65GB$$

is obtained.

Next, the time calculation unit 12 subtracts the estimate error value 32 (i.e. 0.1 GB) from the above obtained free area, in order to obtain area size which reflects the compression error and the unwritable area (hereinafter referred to as "guaranteed area size"):

$$1.65-0.1=1.55GB$$

Then, the time calculation unit 12 determines remaining recordable time by dividing the guaranteed area size by the time conversion parameter 31 (0.05GB/min):

$$1.55(GB) / 0.05(GB/min) = 31(min)$$

The time calculation unit 12, after calculation, stores the resulting remaining recordable time value, the capacity of the optical disk 6 obtained from the management data file 22, and the free area of the optical disk 6 obtained in the calculation of the remaining recordable time, in the given area in the memory 122, then commands the display control unit 13 to display the remaining recordable time.

The display control unit 13 generates data for the remaining recordable time display screen for the graphical representation, and displays a remaining recordable time display screen on the display 5.

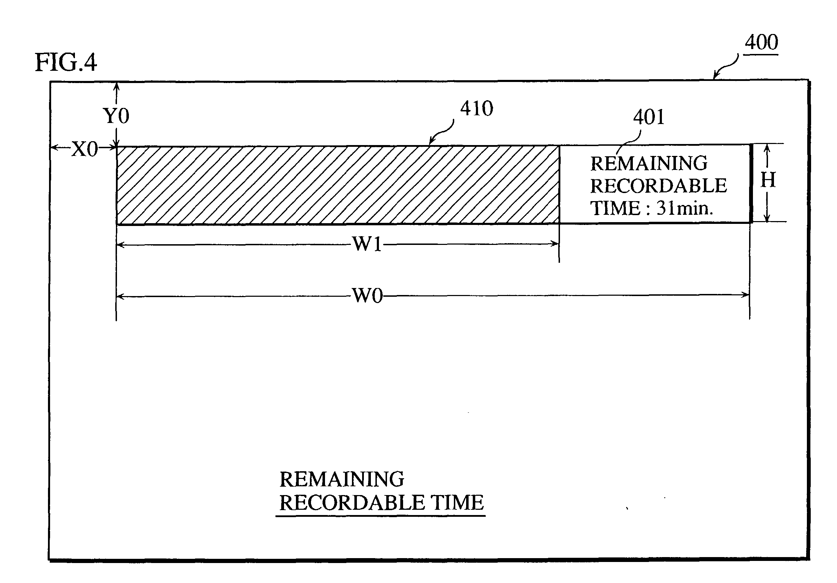

Fig. 4 shows a remaining recordable time display screen 400 that the display control unit 13 makes the display 5 to display.

The remaining recordable time display screen 400 shows a recording time chart 410, which is a percentage bar chart that represents the ratio of both allocated and unallocated area sizes, to the capacity of the optical disk (as assumed as 100). In the chart, a remaining recordable time 401 is displayed in the portion of the graph corresponding to the unallocated area.

Note that "H" signifying the height of the recording time chart 410, "W" signifying width, "X0" and "Y0" both signifying the display location, and "W1" signifying the starting position of the portion corresponding to remaining recordable time, are inserted for understanding in the figure, and not displayed in the actual screen.

The display control unit 3 generates data for the remaining recordable time display screen 400, using format information for the remaining recordable time display screen, X and Y (height and width) information of the screen of the display 5, the information from the memory 122 inside the time calculation unit 12 (i.e. the remaining recordable time value, the capacity of the optical disk 6, and the free area size of the optical disk 6). Among the above information, the format information for the remaining recordable time display screen comprises of a relative value for height of chart "h," a relative value for width of chart "w," and a relative value of display location of graph (x, y) assuming that the height and width of the screen to be both 100, and is stored in the display control unit 13. X and Y (height and width) information is acquired by the display control unit 13 from the display 5, when the display 5 is connected to a personal computer including the remaining recordable time calculation apparatus, and is held in the display control unit 13.

The following is the specific procedures for the display control unit to generate data for the remaining recordable time display screen 400.

First, the formulae for calculating display location (X0, Y0), chart height "H", and chart width "W0" are as follows respectively:

$$X0 = X * (x/100)$$

$$Y0 = Y * (y/100)$$

$$H = Y * (h/100)$$

$$W0 = X * (w/100)$$

"W1," which signifies the size of allocated stream area in the optical disk, is calculated as the following:

$$W1 = W0 * ((S-S0)/S)$$

Where "S0" represents the free area in the disk, and "S," the capacity of the disk.

Finally, the display control unit 13 determines the display location of the remaining recordable time 401 in the chart 410 based on this value "W1," and sends the other resulting data and the data for drawing the chart to display 5, which in turn displays the remaining recordable time screen 400.

(Operations)

The following is a description on the operations performed by the remaining recordable time calculation apparatus in this embodiment with reference to drawings.

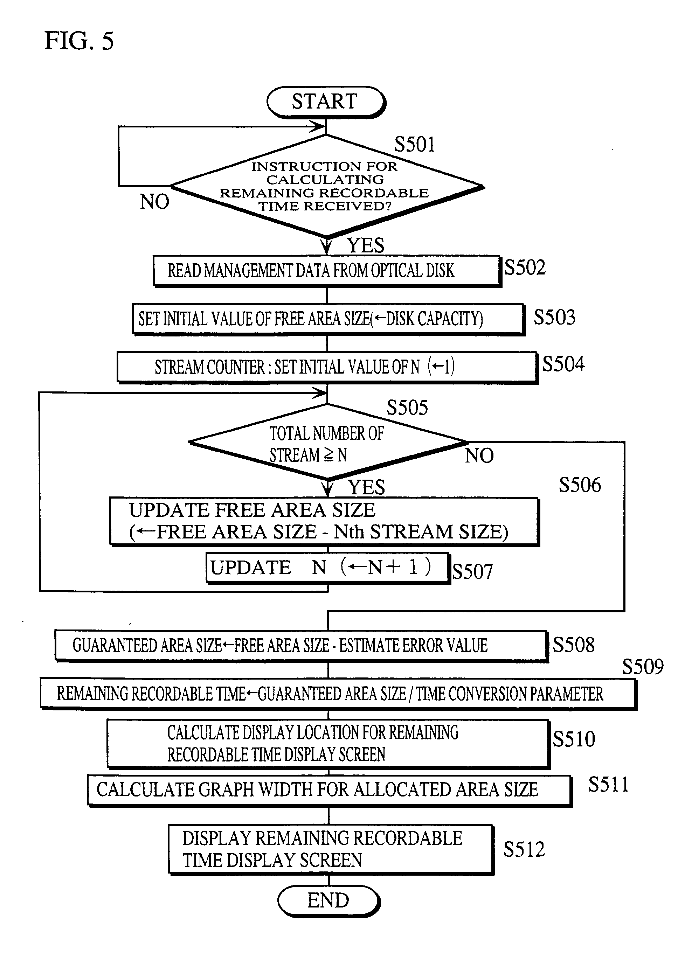

Fig. 5 is a flow chart of the remaining recordable time calculation process.

First, the disk is inserted in the driver device which is the data read/write unit 11. The user instruction receiving unit 16, receiving a user's instruction, instructs the time calculation unit 12 to start the remaining recordable time calculation (S501:YES). Then, the time calculation unit 12 instructs the data read/write unit 11 to read out the data stored in the management data file. The data read/write unit 11, in turn, stores the read data (i.e. the value of the disk size information 221 and the management data 221) in the memory 122 (S502).

The time calculation unit 12 sets the initial value of the free area to the value of the disk size information 221 (S503). Then it applies the process of subtracting the compressed stream data size (obtained from the management data 222) from the initial value (S506), to every piece of stream data (S504, S505, S507). Then, it obtains the guaranteed area size by subtracting the estimate error of the calculation parameter 32 from the calculated value above (S508).

Next, the time calculation unit 12, by dividing the above obtained guaranteed area size by the value of the time conversion parameter, calculates the remaining recordable time (S509). Then, the unit 12 instructs the display control unit 13 to display the remaining recordable time display screen. Receiving this instruction, the display control unit 13 reads the data such as the remaining recordable time from the memory 122, and obtains the display location of the chart 410 in the remaining recordable time display screen 400 (S510).

The display control unit 13, then, obtains "W1" (see Fig. 4) using the values of both the capacity and the free area size of the optical disk 6. Then it in turn, using "W1," obtains the display location of the remaining recordable time 401 in the chart 410 (which is to show the ratio of the allocated area to the optical disk capacity) (S511). Then the display control unit generates required data for the remaining recordable time display screen 400 using all the calculation results and the screen format information, and finally it displays the remaining recordable time display screen 400 on the display 5 (S512).

(Conclusion)

In this embodiment, the remaining recordable time calculation apparatus 1, in converting the free area of the disk to remaining recordable time , subtracts, from the free area, the estimate error value reflecting the compression error and unwritable area in the optical disk. Accordingly, the remaining recordable time of the video stream shown for users is guaranteed at the time of calculation. In addition, shown the remaining recordable time display screen 400, users can recognize the disk as to its use state.

2. Second Embodiment

The following is a description of a remaining recordable time calculation apparatus according to the second embodiment of the present invention. The remaining recordable time calculation apparatus in this embodiment stores running time of each compressed stream data as management data in an optical disk, thereby calculates the remaining recordable time.

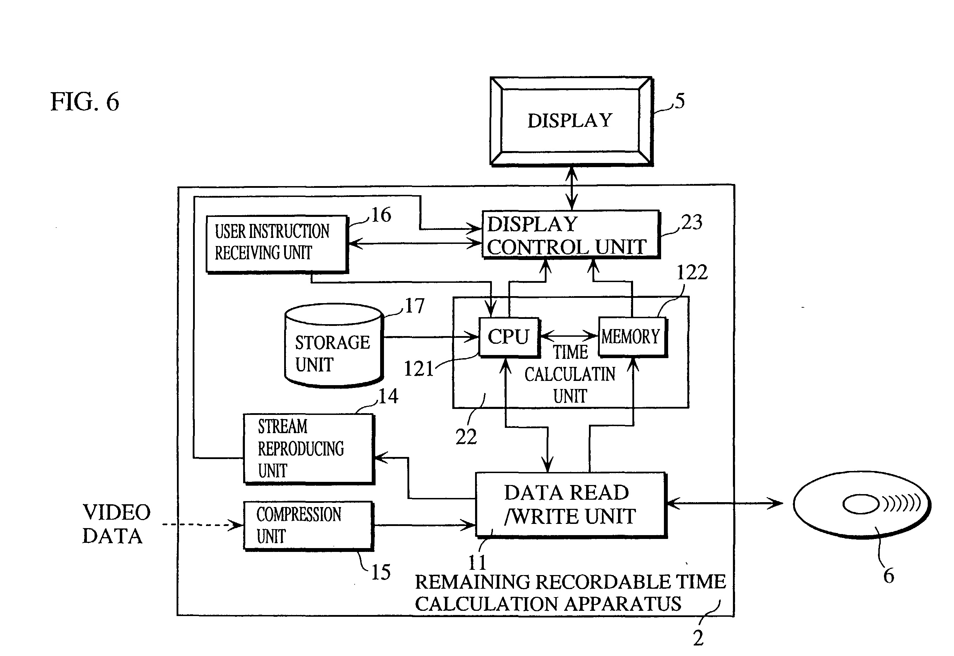

Fig. 6 illustrates the structure of a remaining recordable time calculation apparatus 2 in this embodiment. Here, components that perform the same process as the first embodiment are assigned the same reference numbers and will not be described. The content of the management data in the optical disk 6, and the processes in the time calculation unit 22 and in the display control unit 23 are unique to this embodiment.

The first description is on the management data on the optical disk 6.

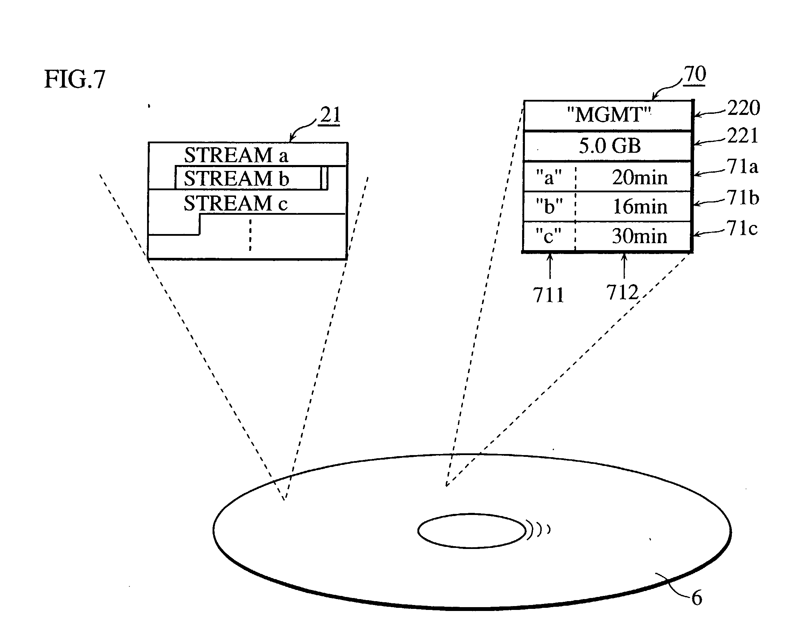

Fig. 7 is a chart showing compressed stream data and its management data stored in the optical disk 6. In the optical disk 6, three pieces of compressed stream data a, b, c, and the management data file which includes management data 71a, 71b, 71c (hereinafter referred collectively to as "management data 71") corresponding to each piece of compressed stream data.

The management data file 70 includes, other than management data, identification information 220 and disk size information 221 (as in the first embodiment).

The management data 71 comprises of the two items : a stream ID 711 which identifies each corresponding compressed stream data; and running time 712 (in units of minute). The running time 712 shows running time of each compressed stream data identified by the stream ID 711, when it is decoded and displayed as a video stream. The above obtained running time does not always correspond to the time obtained by the division of the compressed stream data size by the time conversion parameter (i.e. bit rate). The management data 71 in Fig. 7 shows that the running time for the three compressed stream data pieces are, 20 minutes, 16 minutes, and 30 minutes, respectively.

The management data 71, as the management data 222 in the first embodiment, is generated and stored by the data read/write unit 11, when it writes the compressed stream data in the optical disk 6. Running time information may be obtained from the compression unit 15. Or the data read/write unit 11 may calculate running time based on the time stamp information. The time stamp information is created as management information, when the compressed stream data is written on the optical disk 6. The time stamp shows a starting time and a completing time of the compression or the writing for each stream data. Therefore, running time is obtained by subtracting the starting time from the completing time.

The time calculation unit 22 calculates remaining recordable time using the management data and the calculation parameters. The calculation parameters are the same as those of the first embodiment.

The following is a detailed description of the remaining recordable time calculation process using the management data 71 and the calculation parameters. The time calculation unit 22, upon receiving, from the data read/write means 11, a completion notice of the writing of the management data file content on the memory 122, reads out the calculation parameters 300 stored in the memory 17, and starts calculation.

First, the data read/write unit 11 obtains "the capacity of the disk in time unit," based on the management data file 70 and the calculation parameters 300. Here, "the capacity of the disk in time unit" shows how many minutes of video streams are able to be recorded, in the aggregate, on the disk, taking into consideration the estimate error or the unwritable area. Specifically, the value is obtained by: first subtracting the estimate error 32 of the calculation parameters from the capacity of the optical disk 6 which is shown by the disk size information 221; and secondly dividing the above-calculated value by the time conversion parameter 31 of the calculation parameters. The following is the formula:

$$(5.0(GB) - 0.1 (GB)) / 0.05(GB/min) = 98 (min)$$

Next, the time calculation unit 22 further subtracts the running time of the already recorded compressed streamed data. Finally using the above result, the time calculation unit 22 obtains guaranteed running time of video streams that can be recorded on the free area of the disk 6 (i.e. guaranteed remaining recordable time), taking into account the estimate error and the unwritable area. That is:

$$98 - (20 + 16 + 30) = 32 (min)$$

The time calculation unit 22, after calculating the remaining recordable time, stores the resulting remaining recordable time and the contents of the management data file 70 in the given area of the memory 122, and then orders the display control unit 23 to display the calculated remaining recordable time on the display.

Next, the following is a description of the process that the display control unit 23 performs. The display control unit 23, along with representing the remaining recordable time graphically, displays the screen showing running time of a particular compressed stream data of users' choise, on the display. This process is necessary because users sometimes want to delete recorded compressed stream data in order to increase the free area of the disk (i.e. in order to enlarge the remaining recordable time). That is, this process displays necessary information for selecting which streams to be deleted for users .

Therefore, the display control unit 23 makes the display 5 to display two kinds of screens.

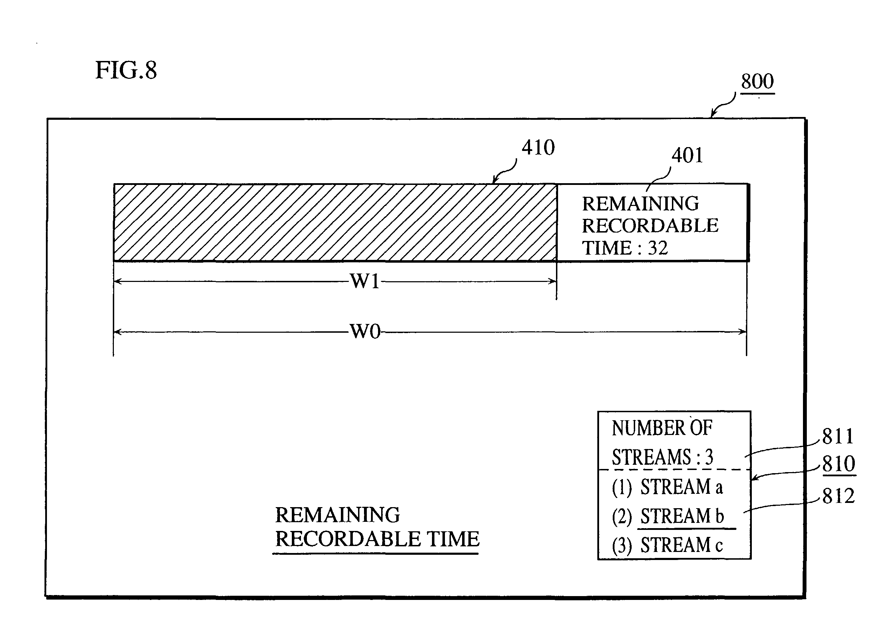

Fig. 8 shows a remaining recordable time display screen 800, which the display control unit 23 makes the display 5 to display.

The remaining recordable time display screen 800 is mostly the same as the remaining recordable time display screen 400 in the first embodiment. What is different is a stream indicating area 810. The stream indicating area 810 comprises of a stream-number display unit 811 which shows the number of streams recorded on the disk, and a instruction receiving field 812 for receiving users' selection of a stream. The display control unit 23 obtains the number of streams to be shown for the stream-number display unit 811, based on the number of management data. For the instruction receiving field 812, stream identifying information based on the contents in the stream ID 712 of the management data 71 is displayed. Users refer to the stream IDs shown on the instruction receiving field 812, in the selection of a compressed stream data. The user instruction receiving unit 16 receives the contents of the user selection, and notifies the display control unit 23 of the choice.

The display control unit 23 obtains "W1" which signifies the display location of the remaining recordable time 401 in the chart 410 (i.e. which shows the ratio of the allocated area for the compressed stream data to the capacity of the optical disk), in a different manner as the control unit 13 in the first embodiment. In the first embodiment, the display control unit 13 obtains "W1" from information on the capacity of the optical disk and the size of free area. On the other hand, the display control unit 23 obtains "W1" from the total time and the remaining recording time of the optical disk. That is, assuming the width "W0" of the chart 410, the remaining recordable time "T0", and the total time assigned for recording "T":

$$W1' = W0 * ((T - T0) / T)$$

Further, the display control unit 23 generates data for the stream display screen that shows the running time of the compressed stream data of users' choice from the stream indicating area 810, and displays the screen on the display 5.

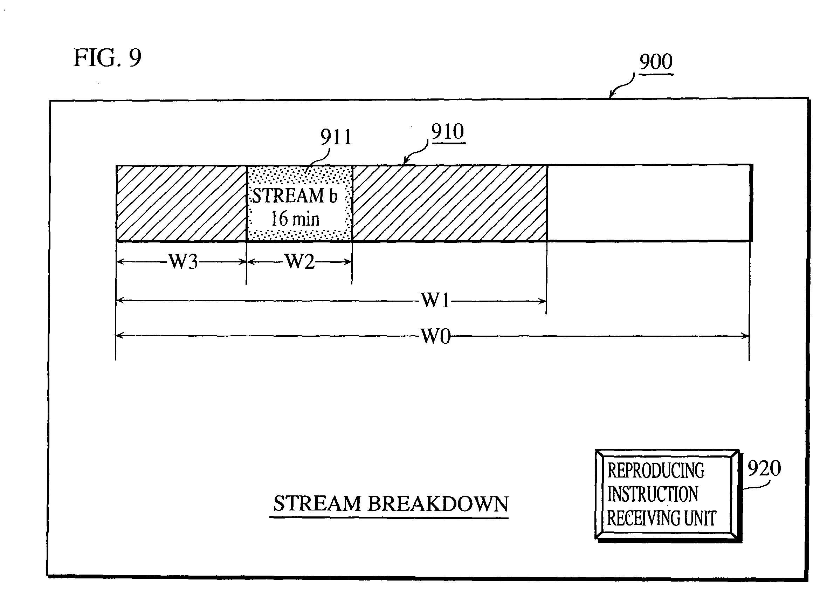

Fig. 9 is a representation of a stream display screen 900 that the display control unit 23 displays on the display 5.

The structure of the stream display screen 900 is similar to the remaining recordable time display screen 800, except that an indicated stream part 911, which shows the running time of the compressed stream data of users' choice, is added. (In this example, it is assumed that the stream b is selected.) "W2" of the indicated stream part 911 shows the ratio of the running time of the stream indicated to the total time of the optical disk, and "W3" shows the offset from the head of the disk to the location of the indicated stream.

W1 and W2 are respectively obtained using the following formulae, assuming: "$T_n$" as the $n^{th}$ stream, which was selected by a user; "$T_1$", "$T_2$" as the running time of the $1^{st}$, the $2^{nd}$, ... stream respectively; "T" as the total time of the disk; and "W0" as the width of the chart 910,

$$W2 = W0 * (T_n / T)$$

$$W3 = W0 * ((T_1 + T_2 + T_{n-1}) / T)$$

Moreover, the stream display screen 900 is equipped with a reproducing instruction receiving unit 920, which is to receive an instruction to reproduce the selected compressed stream data of users' choice. This enables users to check the content of compressed stream data before deleting it. The display control unit 23, upon receiving an instruction from a user to reproduce the stream via the reproducing instruction receiving unit 920, sends instruction to reproduce stream to the reproducing unit 14. The reproducing unit 14, then sends the stream ID to the data read/write unit 11, and makes it to read out the compressed stream data which corresponds to the ID, decodes the data and sends the resulting video stream to the display control unit 23. The display control unit 23 displays the video stream on the display 5.

(Operations)

The following is a description of the operation of the remaining recordable time calculation apparatus 2 with reference to the drawings. The same steps as those of the remaining recordable time calculation apparatus 1 in the first embodiment are assigned the same reference numbers and will not be described here.

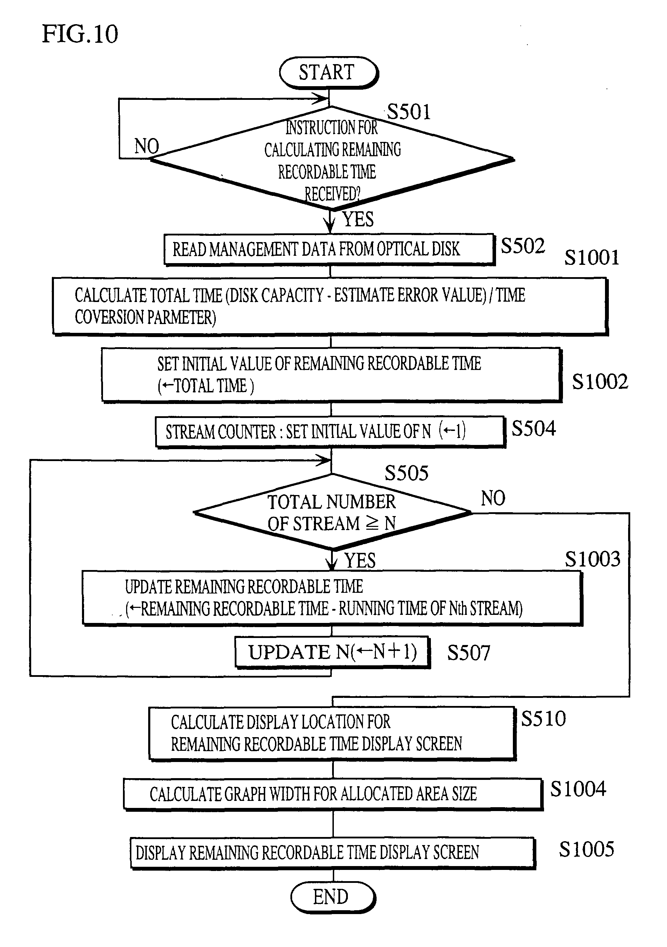

Fig. 10 is a chart showing the flow of the remaining recordable time calculation processes performed by the remaining recordable time calculation apparatus 2.

The first two steps are common to the first embodiment, up to where a time calculation unit 22 starts its operation, and the data/read unit 11 reads out the content of the management data file 70 (S501, S502).

The time calculation unit 22 obtains the total time period for which recording is possible on the optical disk 6, by performing calculation using the capacity of the optical disk 6 and the calculation parameters 300. Specifically, it is calculated by first subtracting the estimate error value from the capacity of the disk, and then by dividing the obtained value by the time conversion parameter(S1001). Then, the time calculation unit 22 sets the initial value of the remaining recordable time to the resulting total time (S1002).

Next, the time calculation unit 22 applies the process of subtracting the running time of stream from this initial value (S1003) to each stream (S504, S505, S507). The resulting value from the above calculation is the remaining recordable time. Then, the unit 22 instructs the display control unit 23 to display the remaining recordable time display screen 800.

The display control unit 23 first obtains the chart display location in the remaining recordable time display screen 800 (S510).

Then, the display control unit 23 obtains the ratio of already allocated area for the compressed stream data in the optical disk 6 (which will be "W1", the display location of the remaining recordable time in the chart 910 , using data on the remaining recordable time and the total time of the disk (S1004). It, then combines the results and the screen format information to generate data for the remaining recordable time display screen 800, thereby displays the remaining recordable time display screen 800 on the display 5 (S1005).

As mentioned before, the remaining recordable time calculation apparatus 2 performs switching the screen from the remaining recordable time display screen 800 to the stream display screen 900, or the stream reproduction. They are not explained, however, in Fig. 10 since these performances are optional.

As explained above, the remaining recordable time calculation apparatus 2 in this embodiment, calculates the total time period for which recording is possible on the optical disk by subtracting the fluctuation which takes into consideration both the compression error and the unwritable area of the optical disk from the capacity. Then, In order to obtain the remaining recordable time, it subtracts the running time of the compressed stream data stored on the optical disk from this total time period for which recording is possible. Therefore, this apparatus can show users the amount of video streams expressed in time (i.e. remaining recordable time) that is guaranteed to be recorded on the disk.

Moreover, being displayed the stream display screen 900 in addition to the remaining recordable time display screen 800, users can know at a glance, the ratio of the remaining recordable time and the current use state of a disk, and the portion of the allocated area for a particular stream. This apparatus is also able to reproduce the content of the particular stream and display it for the user.

(Variant of the second embodiment)

(First varint of the second embodiment)

In the second embodiment, the remaining recordable time is calculated by simply subtracting the stream running time from the total time period for which recording is possible on an optical disk. However, even for streams having the same running time, the data amount can be different depending on the recording mode (i.e. bit rate) applied for the particular compressed stream data. Thus, addition of information on the recording mode or the bit rate in the management data will be useful.

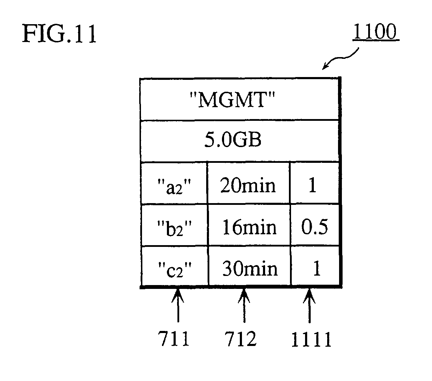

Fig. 11 is a management data file 1100 in this variant form of the second embodiment. This management data file 1100 is mostly the same as to the management data file 70 depicted in Fig. 11 in its structure, except that "recording mode information 1111" is added as a management data item. The recording mode information 1111 represents a ratio of the recording mode adopted in the compression of the corresponding stream to the standard bit rate in the standard mode (which is the same value as the time conversion parameter 31 of the calculation parameters 300), assuming this standard bit rate is 1.

In Fig. 11, there are streams $a_2$ and $c_2$ that are recorded in the standard mode, and $b_2$ which is recorded in the double mode. The total time period for which recording is possible on an optical disk is calculated using the standard mode. In calculating the remaining recordable time, the time calculation unit 22 first multiplies running time of each compressed stream data by its corresponding recording mode information 1111, obtains the sum of running time of every compressed stream calculated above, and subtracts the result from the total time period for which recording is possible on a disk.

In Fig. 11 example, if the total time period for which recording is possible on a disk is assumed to be 98 minutes, the remaining recordable time is obtained as follows:

$$98 - (20 * 1 + 16 * 0.5 + 30 * 1) = 40 \text{ (min)}$$

If there are more than 2 kinds of bit rates, a total time period for which recording is possible on a disk is calculated based on the standard bit rate, using the time conversion parameter of the calculation parameter as the standard bit rate . The remaining recordable time calculation starts by adjusting the running time of streams compressed at non-standard bit rates according to the ratio of the non-standard bit rates to the standard bit rate, and then subtracts the result from the total time of the disk.

The bit rate (i.e. the recording mode) is recorded by the data read/write unit 11. The data read/write unit 11 acquires the recording mode or the value of the bit rate from the compression unit 15. Note that, the data read/write unit 11 does not have to add information on the recording modes or the bit rates to the management data, if the above operation is performed (i.e. storing as management data the running time of the compressed streams recorded by non-standard recording mode or non-standard bit rates after converting it into its corresponding value using the standard recording mode or the standard bit rate).

(Second variant of the second embodiment)

The recording mode or the bit rate information is recorded as management data in the first variant example. However, the recording mode or the bit rate information could be stored as part of management information in an optical disk.

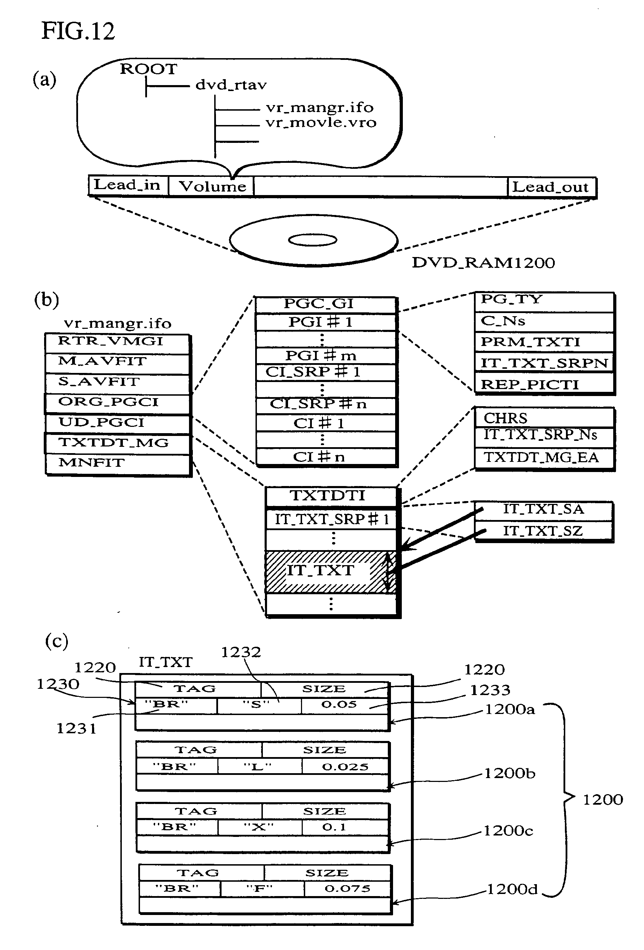

Fig. 12 shows an example of storing place and data structure of bit rate information, stored as part of management information in an optical disk in accordance with VR standard.

Fig. 12 (a) is a chart showing a data structure of an ordinary optical disk. Stream data and corresponding management data are stored in "Volume" area. Specifically, stream data is stored in a file "vr_movie.vro", and management data in a file "vr_mangr.ifo".

Fig. 12 (b) shows a structure of vr_mangr.ifo. The file vr_mangr.ifo comprises such management data as corresponding addresses of recorded video streams, and date/time information thereof. There is an area named "IT_TXT" in the "TXTDT_MG" of the file vr_mangr.ifo. Any kind of management data can be stored in IT_TXT. Bit rate information in this second variant example is set and stored in IT_TXT. Each recorded stream data has corresponding information on IT_TXT, and an pointer "IT_TXT_SPRN" which is management information set for every stored stream data individually, identifies which information corresponds to which stream data.

Fig. 12 (c) shows an example of bit rate information set and stored in IT_TXT, relating to its structures and contents. In this example, there are four bit rate information corresponding to four stream data, 1200a, 1200b, 1200c, and 1200d, set in IT_TXT (hereinafter referred to as "bit rate information 1200" if referred collectively).

The bit rate information 1200 comprises of tag 1210 (whose value is set in accordance with RV standard), size information 1220 signifying a size of a piece of bit rate information, and a data 1230. The above three components were defined as necessary components for data stored in IT_TXT by the RV standard. Data 1230 can be structured in any ways. Here, the data 1230 includes an application ID 1231, a mode ID 1232, and a bit rate 1233. The application ID 1231 includes BR, identification information showing that bit rate information is stored. The mode ID 1232 stores information on recording modes, and the bit rate 1233 stores actual bit rates for each recording mode.

In the example of Fig. 12 (c), the bit rate information 1200 shows the following: each of the bit rate information 1200a shows that a recording mode for a first stream data is a standard mode (i.e. ID:S, and a bit rate is 0.05GB/min); the bit rate information 1200b shows that a recording mode of a second stream data is a long-period mode (i.e. ID:L, and a bit rate is 0.025GB/min), and the bit rate information 1200c shows that a recording mode of a third stream data is a high-quality mode (i.e. ID:X, and a bit rate is 0.10GB/min). Finally the bit rate information 1200d shows that a recording mode for a fourth stream data is a free mode (ID:F, and a bit rate is 0.075GB/min). The free mode enables users to set an arbitrary recording mode, within the range of 0.025GB/min and 0.10GB/min.

The data read/write unit 11 records the bit rate information 1200. It acquires a recording mode and a corresponding bit rate used in compression through the compression unit 15.

The following is a description of remaining recordable time calculation using the above bit rate information.

First, the data read/write unit 11 reads contents of the management data file 70 and bit rate information stored in IT_TXT. When reading the bit rate information, it identifies a location of each bit rate, according to IT_TXT_SPRN of corresponding PGI. The data read/write unit 11 then sends the management data and the bit rate information to the time calculation unit 22.

The time calculation unit 22 calculates a total time of the disk from the management data and the calculation parameters . Specifically it is obtained by the following equation:

(Disk capacity - estimate error value) / time conversion parameter(i.e. the standard bit rate, 0.05GB/min)

Then, the time calculation unit 22 adjusts running time for each stream data taking into account ratios of each corresponding bit rate information to the standard bit rate, and subtract the above adjusted running time from the total time, in order to obtain a remaining recordable time. For example, assume running time of the four streams are 20 minutes, 30 minutes, 15 minutes, and 12 minutes, respectively. The first stream was recorded by the standard mode according to the bit rate information 1200. Therefore there is no need for an adjustment for the first stream. The second stream, recorded by the long-period mode (i.e. half bit rate as the standard bit rate), needs adjustment by multiplying 30 minutes by 0.5. The third stream recorded by the high-quality mode (i.e. twice as much as the standard bit rate), needs adjustment by multiplying 15 minutes by 2. The fourth stream recorded by the free mode (i.e. a one and half as much as the standard bit rate) needs adjustment by multiplying 12 minutes by 1.5.

Concretely, the remaining recordable time in this example is obtained from the following equation:

$$98 - (20 + 30*0.5 + 15*2.0 + 12*1.5) = 15 \text{ (min)}$$

Note that in this example, IT_TXT_SPRN in PGI determines which stream data each bit rate corresponds to. However, it is possible to set the same stream ID information as those in the management data as part of bit rate information, in order to identify which stream each piece of bit rate information corresponds to. It is also possible to set management data including both the stream ID and the running time information (the management data 71 in Fig. 7) inside IT_TXT. In such cases, the management data file is unnecessary. As for the disk size information, it is required to use information stored in the management information.

3. Third Embodiment

The following is a description of a remaining recordable time calculation apparatus pertaining to the third embodiment of the present invention. The remaining recordable time calculation apparatus in this embodiment, stores both size and running time information as management data in an optical disk. Then the apparatus performs the same calculations as those in the first and second embodiments, thereby obtains two calculation results, and displays users shorter remaining recordable time of the two for users.

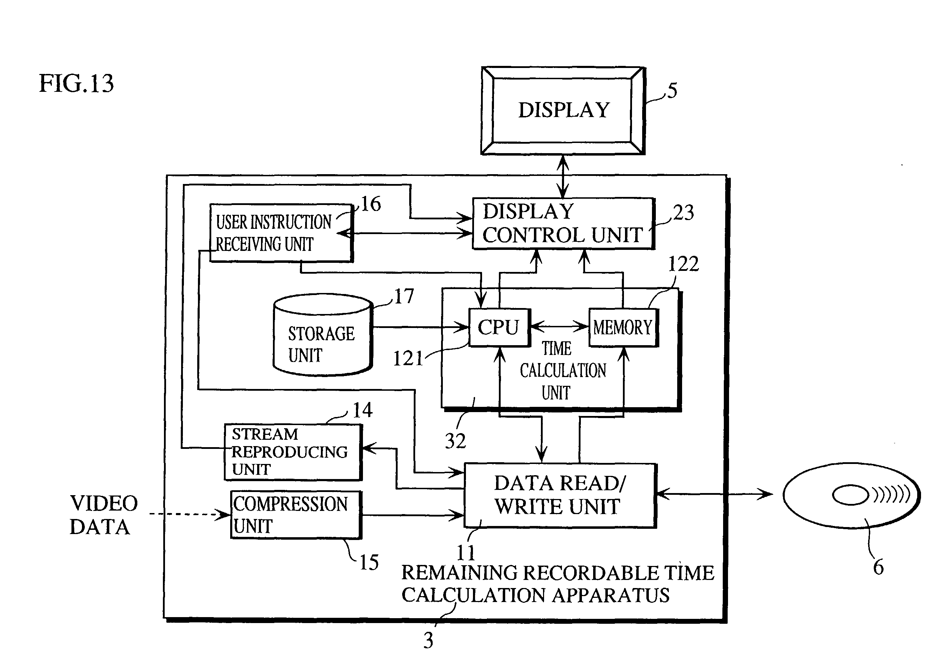

Fig. 13 shows components of a remaining recordable time calculation apparatus 3 in the third embodiment. The units performing the same operation as those of in the first and second embodiments, are assigned the same reference numbers and will not be described here. Contents of the management data retained in the optical disk 6 and the operation of the time calculation 32 are unique to this embodiment.

First, the following is a description on a management data retained in an optical disk 6 of this embodiment.

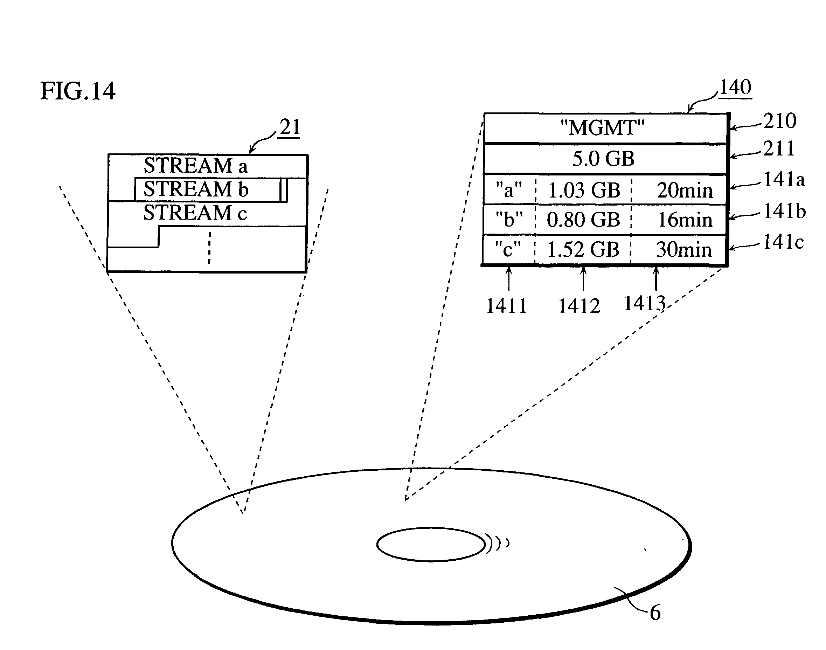

Fig. 14 is a diagram showing compressed stream data and management data recorded in the optical disk 6. The optical disk 6 includes three pieces of compressed stream data a, b, c, and their corresponding management data 141a, 141b, 141c respectively (hereinafter referred collectively as management data 141.

The management data 141 is in a management data file 140, and the management data file includes identification information 210 and disk size information 211 other than the management data 141.

The management data 141 comprises of the following three items: a stream ID1411 which identifies a corresponding compressed stream data; data size 1412 expressed in units of GB; and running time 1413 expressed in units of minutes . Contents of the data size 1412 coincide with those of the data size 2222 in the first embodiment, and contents of the running time 1413 coincide with those of the running time 712 in the second embodiment. The management data 141 shows that the data size and the running time of the three compressed stream data are: 1.03GB, 20 minutes; 0.80GB, 16 minutes; and 1.52GB, 30 minutes, respectively.

The management data 141, as that of the first and second embodiments, is generated by the data read/write unit 11 and is stored by the data read/write unit 11 in the optical disk 6.

The following is a detailed description of remaining recordable time calculation performed by the time calculation unit 13 using the management data 141 and calculation parameters .

First, the time calculation unit 32 performs the same calculation as in the first embodiment using data size of each stream, in order to obtain the first kind of remaining recordable time.

Specifically, the time calculation unit 32 starts calculation by calculating the amount of free area (①), obtains the size of the guaranteed area by subtracting the estimate error value 32 from the amount of the free area (②), and divides the size of the guaranteed area by the time conversion parameter 31 (③), to finally obtain the remaining recordable time.

The following is the equational representation:

$$5.0 - (1.03 + 0.80 + 1.52) = 1.65 \ (GB) \qquad ①$$

$$1.65 - 0.1 = 1.55 \ (GB) \qquad ②$$

$$1.55 \ (GB) / 0.05 \ (GB/min) = 31 \ (min) \qquad ③$$

Therefore, the first remaining recordable time is 31 minutes.

Secondly, the time calculation unit 32 performs the same calculation as in the second embodiment using running time of each stream, in order to obtain the second kind of remaining recordable time.

Specifically, the time calculation unit 32 starts calculation by obtaining the total time (①), and then it subtracts the sum of the total amount of running time of each recorded data stream from the total time (②). The following is the equational representation:

$$(5.0(GB) - 0.1(GB)) / 0.05 \ (GB/min) = 98 \ (min) \qquad ①$$

$$98 - (20 + 16 + 30) = 32 \ (min) \qquad ②$$

Therefore, the second remaining recordable time is 32 minutes.

As it turned out, the shorter remaining recordable time of the two is the one calculated using the size of compressed stream data. Accordingly, the time calculation unit 32 decides that this value "31 minutes" is to be shown for the user as the remaining recordable time.

The time calculation unit 32, completing the calculation, stores the resulting remaining recordable time and the contents of the management data file 130 in a given area of the internal memory 122, then it orders the display control unit 23 to show the remaining recordable time on the display.

(Operations)

The following is a description on the operations performed by the remaining recordable time calculation apparatus 3 in this embodiment with reference to drawings. Note that the same steps as the remaining recordable time calculation apparatus 1 or 2 are assigned the same reference numbers as those in the first or second embodiments, and will not be described here.

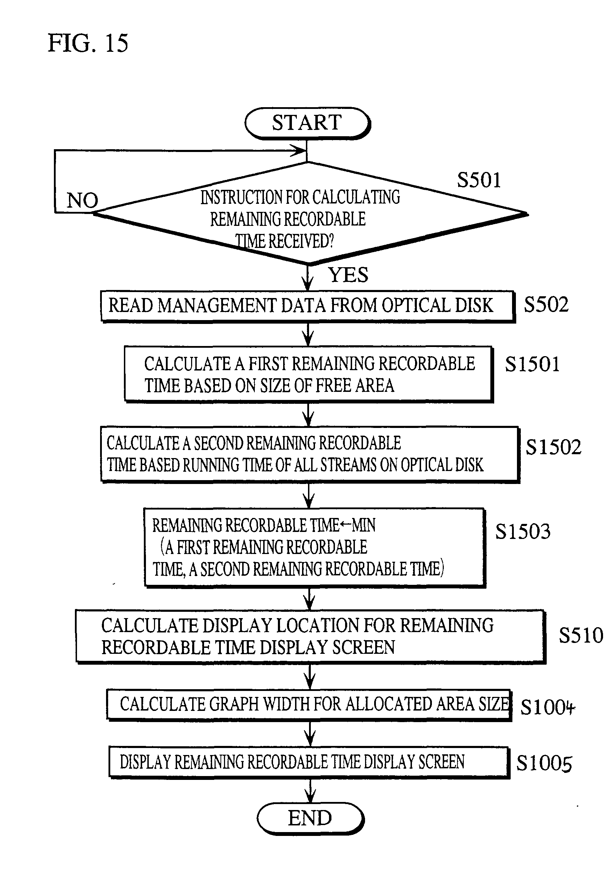

Fig. 15 is a chart showing the flow of the remaining recordable time calculation performed by the remaining recordable time calculation apparatus 3.

The first two steps are common to the first embodiment, up to where a time calculation unit 22 starts its operation, and the data/read unit 11 reads out the content of the management data file 70 (S501, S502).

Then, the time calculation unit 32 calculates the remaining recordable time using the amount of free area in the optical disk (S1501). This process is identical to those shown as steps S503-S507 in the flowchart (Fig. 5) relating to the first embodiment.

Next, the time calculation unit 32 obtains the remaining recordable time using the total time of the disk and the sum of the running time of each stream (a step 1502). This process is identical to those shown as steps S1001 -S507 in the flowchart (Fig. 10) relating to the second embodiment.

Then, the time calculation unit 32 compares the values calculated in the step S1501 and the step S1502 and decides the smaller value of the two to be the final remaining recordable time (S1503), and orders the display control unit 23 to generate and display the remaining recordable time display screen 800.

The display control unit 23, in turn, displays the screen on the display, whose specific process is identical to that of the display control unit 23 in the second embodiment (i.e. steps S1004 and S1005 in Fig. 10).

(Conclusion)

As explained above, the remaining recordable time calculation apparatus 3 in this embodiment calculates two kinds of remaining recordable time; one using the amount of free area in a optical disk, and the other from the running time of the compressed stream data in a disk, thereby shows users the shorter remaining recordable time of the two. Accordingly, it is able to show users more assured value as a time period for which video streams can still be recorded on an optical disk.

In this embodiment, the remaining recordable time display screen displays the same content as that of the second embodiment. However, it is also possible to generate a remaining recordable time display screen using the capacity and the amount of the free area of an optical disk, as the first embodiment.

Although the present invention has been fully described by way of examples with reference to the accompanying drawings, it is to be noted that various changes and modifications will be apparent to those skilled in the art. Therefore, unless otherwise such changes and modifications depart from the scope of the present invention, they should be construed as being included therein.

It is to be noted that the concrete values or units shown in the description relating to various kinds of information such as the remaining recordable time, the disk size, the stream size, the running time, the estimate error, and the time conversion parameter are presented as merely an example. For instance, time can be expressed in units of seconds, frames, or fields, although it is represented as units of minutes in the description. Likewise, sizes can be expressed in units of bits, although gigabytes are used in the description.

As for the estimate error value, it is expressed as a fixed value in units of GB in the description. However, it is also possible to use the ratio for representations . The estimate error value also could be increased or decreased according to the ratio of the amount of free area to the disk capacity. Furthermore, the estimate error value could be adjusted to take into account a number of streams or a number of overwriting by using these conditions as parameters, since unwritable area results because of the fragmentation of the area due to writing many small streams, or overwriting streams where a different stream was before.

The bar chart used in the description to represent remaining recordable time in the screens can be replaced by other charts such as a pie chart.

Although an optical disk is presented as a recording medium in the description, recording media are not confined to optical disks. The present invention can also be applied to any recording media that can store data (such as video streams) that has a conception of time using a data compression technique.

If there are more than one recording mode, the display screen can be arranged to show the remaining record time in each recording mode. The remaining recordable time 401, then, will be: "in the standard mode : ** minutes, in the long periods mode : ** minutes."

As for the management data, it is not necessary to record it on an optical disk as a management data file. It can be replaced with a part of management information recorded on an optical disk in accordance with standards for recording data to optical disks (such as the DVD recording standard) . This implies that the remaining recordable time calculation is possible for optical disks where streams are recorded by different types of recording devices (i.e. devices that do not record/delete management data when recording/deleting streams). In this instance, the data read/write unit 11 has to perform the following process.

After checking to see if a management data file exists on an optical disk, if the management data file does not exist, the data read/write unit 11 reads necessary information (i.e. the disk size, the identification information, the size and/or the running time of each stream obtained from the time stamp information) out of the management information which is in accordance with the recording standards, and pass this information to the time calculation unit. If the management data file exists, the data read/write unit 11 compares the number of streams (i.e. the number of management data in the management data file), and the number of streams indicated by the management information on the optical disk. The inconsistency between the two numbers means that a different type of recording device has been used to record or delete streams, which is not reflected in the management data. In such case, the data read/write unit 11, referring to necessary information from the management information in accordance with the recording standards, updates contents of the management data file in order to agree with the present state of the optical disk. Then the read/write unit 11 pass the updated contents of the management data file to the time calculation unit.

Although the present invention has been fully described by way of examples with reference to accompanying drawings, it is to be noted that various changes and modifications will be apparent to those skilled in the art. Therefore, unless such changes and modifications depart from the scope of the present invention, they should be construed as being included therein.

**Claims**

1. A remaining recordable time calculation apparatus that calculates remaining recordable time of a recording medium, the recording medium containing one or more video streams and corresponding management information, and the one or more video streams being compressed when recorded on the recording medium,

   the remaining recordable time calculation apparatus comprising:

   management data read means for reading a capacity of the recording medium and data sizes of the one or more video streams;
   calculation parameter holding means for holding the following calculation parameters,

   (1) an estimate error value for estimating at least one of: an estimate error occurring during compression of a video stream, and a size of an unrecordable area inherent in the recording medium,
   (2) a standard bit rate being a bit rate used in compressing a video stream to be recorded on the recording medium; and

   time calculation means for calculating the remaining recordable time by dividing a free area size of the recording medium by the standard bit rate, where the free area size is obtained by subtracting the data sizes of the one or more video streams and the estimate error value from the capacity of the recording medium.

2. The remaining recordable time calculation apparatus of Claim 1, further comprising display means for displaying the remaining recordable time calculated by the time calculation means,
   wherein the display means displays a ratio of the free area size to the capacity of the recording medium in a graphical form.

3. The remaining recordable time calculation apparatus of Claim 1, further comprising instruction receiving means for receiving a user selection of a video stream out of the one or more video streams stored in the recording medium, and display means for displaying the remaining recordable time calculated by the time calculation means,
   wherein the display means displays a ratio of a compressed data size of the selected video stream, to the capacity of the recording medium in a graphical form.

**4.** The remaining recordable time calculation apparatus of Claim 3, further comprising stream decoding means for decoding a compressed data of the video stream,
wherein the display means further displays an image of the video stream decoded from the stream decoding means.

**5.** The remaining recordable time calculation apparatus of Claim 1, further comprising management data write means for writing the capacity of the recording medium and a compressed data size of a video stream, to the recording medium as the management data,
wherein the management data read means reads out the capacity of the recording medium and the compressed data size, written by the management data write means.

**6.** The remaining recordable time calculation apparatus of Claim 1,
wherein the capacity of the recording medium and the data sizes of the one or more video streams are included in management information generated in accordance with a recording standard of the recording medium.

**7.** A remaining recordable time calculation apparatus that calculates remaining recordable time of a recording medium, the recording medium containing one or more video streams and corresponding management information, and the one or more video streams being compressed when recorded on the recording medium,
the remaining recordable time calculation apparatus comprising:

management data read means for reading, from the recording medium, running time of the one or more video streams;
total time holding means for holding a total time period for which recording is possible on the recording medium, hereinafter referred to as 'the total time', the total time being obtained by first subtracting an estimate error value from a capacity of the recording medium, and then by dividing the subtraction result by a standard bit rate, wherein an estimate error value estimating at least one of: an estimate error occurring during compression of a video stream, and a size of an unrecordable area inherent in the recording medium, and the standard bit rate is a bit rate used in compressing a video stream to be recorded on the recording medium; and
time calculation means for calculating the remaining recordable time by subtracting the running time of the one or more video streams from the total time.

**8.** The remaining recordable time calculation apparatus of Claim 7, further comprising display means for displaying the remaining recordable time calculated by the time calculation means,
wherein the display means displays a ratio of the remaining recordable time calculated by the time calculation means, to the total time in a graphical form.

**9.** The remaining recordable time calculation apparatus of Claim 7, further comprising instruction receiving means for receiving a user selection of a video stream out of the one or more video streams, and display means for displaying the remaining recordable time calculated by the time calculation means,
wherein the display means displays a ratio of the running time of the selected video stream to the total time in a graphical form.

**10.** The remaining recordable time calculation apparatus of Claim 9, further comprising stream decoding means for decoding a compressed data of the video stream,
wherein the display means further displays an image of the video stream decoded by the stream decoding means.

**11.** The remaining recordable time calculation apparatus of Claim 7,

wherein the management data read means further reads compression bit rates recorded in one to one relation with the running time of each of the one or more video streams,
and wherein the time calculation means obtains remaining recordable time by subtracting adjusted running time of each of the one or more video streams from the total time, the adjusted running time being adjusted according to a ratio of the compression bit rates to the standard bit rate.

**12.** The remaining recordable time calculation apparatus of Claim 11, further comprising a management data write means for writing running time of a video stream to be added and a corresponding compression bit rate to the recording medium as the management data,
    wherein the management data read means reads out the running time of the video stream and the corresponding compression bit rate written by the management data write means.

**13.** The remaining recordable time calculation apparatus of Claim 7,
    wherein the running time of the video stream is included in management information generated in accordance with a recording standard of the recording medium.

**14.** A remaining recordable time calculation apparatus that calculates remaining recordable time of a recording medium, the recording medium containing one or more video streams and corresponding management information, and the one or more video streams being compressed when recorded on the recording medium,

    the remaining recordable time calculation apparatus comprising:

        management data read means for reading, from the recording medium, a capacity of the recording medium and data sizes and running time of the one or more video streams;
        calculation parameter holding means for holding the following calculation parameters,

            (1) an estimate error value estimating at least one of: an estimate error occurring during compression of a video stream, and a size of an unrecordable area inherent in the recording medium,
            (2) a standard bit rate being a bit rate used in compressing a video stream to be recorded on the recording medium;

        total time holding means for holding a total time period for which recording is possible on the recording medium, hereinafter referred to as 'the total time', where the total time is obtained by first subtracting the estimate error value from the capacity of the recording medium and then by dividing the subtracted result by the standard bit rate;
        first time calculation means for calculating first remaining recordable time by dividing a free area size of a recording medium by the standard bit rate, where the free area size is obtained by subtracting the data sizes and the estimate error value from the capacity of the recording medium;
        second time calculation means for calculating second remaining recordable time by subtracting the running time from the total time; and
        select means for selecting a shorter one of the first and the second remaining recordable time, so as to present the shorter time as the remaining recordable time to users.

**15.** The remaining recordable time calculation apparatus of Claim 14, further comprising display means for displaying the remaining recordable time selected by the select means,
    wherein the display means displays either a ratio of the free area size to the capacity of the recording medium, or a ratio of the remaining recordable time to the total time, in a graphical form.

**16.** The remaining recordable time calculation apparatus of Claim 14, further comprising instruction receiving means for receiving a user selection of a video stream out of the one or more video streams, and display means for displaying the remaining recordable time selected by the select means,
    wherein the display means displays either a ratio of a compressed data size of the selected video stream to the capacity of the recording medium, or a ratio of a running time of the selected video stream to the total time, in a graphical form.

**17.** The remaining recordable time calculation apparatus of Claim 16, further comprising stream decoding means for decoding a compressed data of the video stream,
    wherein the display means further displays an image of the video stream decoded from the stream decoding means.

**18.** The remaining recordable time calculation apparatus of Claim 14,

        wherein the management data read means further reads compression bit rates recorded in one to one relation with the running time of each of the one or more video streams,
        and wherein the second time calculation means obtains remaining recordable time by subtracting adjusted running time of each of the one or more video streams from the total time, the adjusted running time being adjusted according to a ratio of the compression bit rates to the standard bit rate.

19. The remaining recordable time calculation apparatus of Claim 18, further comprising management data write means for writing running time, a corresponding compression bit rate, and a data size of a video stream to be added, and the capacity of the recording medium to the recording medium as the management data,
wherein the management data read means reads out the running time, the corresponding compression bit rate, and the data size of the video stream to be added, and capacity of the recording medium, written by the management data write means.

20. The remaining recordable time calculation apparatus of Claim 14,
wherein the running time and the data sizes of the one or more video streams, and the capacity of the recording medium are included in management information generated in accordance with a recording standard of the recording medium.

FIG. 1

OPERATIONAL APPARATUS SUCH AS KEY BOARD

EP 1 168 347 A2

FIG. 2

| 22 | | 220 |
|---|---|---|
| "MGMT" | | |
| 5.0 GB | | 221 |
| "a" | 1.03 GB | 222a |
| "b" | 0.80 GB | 222b |
| "c" | 1.52 GB | 222c |

2221  2222

21

STREAM a
STREAM b
STREAM c

6

FIG. 3

<u>300</u>

| TIME CONVERSION PARAMETER | ESTIMATE ERROR VALUE |
|---|---|
| 0.05 GB/min | 0.1 GB |

31        32

FIG.4

400

Y0

X0

410

401

REMAINING
RECORDABLE
TIME : 31min.

H

W1

W0

REMAINING
RECORDABLE TIME

EP 1 168 347 A2

## FIG. 5

```
                    ( START )
                        │
                        ▼
            ┌─────────────────────────┐
            │   INSTRUCTION FOR       │         S501
    ┌──NO───│   CALCULATING           │
    │       │   REMAINING RECORDABLE  │
    │       │   TIME RECEIVED?        │
    │       └─────────────────────────┘
    │                   │ YES
    │                   ▼
    │   ┌─────────────────────────────────────────┐
    │   │ READ MANAGEMENT DATA FROM OPTICAL DISK   │  S502
    │   └─────────────────────────────────────────┘
    │                   │
    │                   ▼
    │   ┌──────────────────────────────────────────────┐
    │   │ SET INITIAL VALUE OF FREE AREA SIZE(←DISK     │  S503
    │   │ CAPACITY)                                     │
    │   └──────────────────────────────────────────────┘
    │                   │
    │                   ▼
    │   ┌──────────────────────────────────────────────┐
    │   │ STREAM COUNTER : SET INITIAL VALUE OF N (←1)  │  S504
    │   └──────────────────────────────────────────────┘
    │                   │
    │                   ▼
    │       ┌─────────────────────────┐
    │       │   TOTAL NUMBER OF       │──NO──┐   S505
    │       │   STREAM ≧ N            │      │
    │       └─────────────────────────┘      │
    │                   │ YES                 │
    │                   ▼                     │
    │   ┌──────────────────────────────────┐ │  S506
    │   │ UPDATE FREE AREA SIZE            │ │
    │   │ (←FREE AREA SIZE - Nth STREAM    │ │
    │   │  SIZE)                           │ │
    │   └──────────────────────────────────┘ │
    │   ┌──────────────────────────────────┐ │
    │   │ UPDATE  N (←N+1)                 │ │ S507
    │   └──────────────────────────────────┘ │
    │                                         │
    └─────────────────────────────────────────┤
                                              │
                        ┌─────────────────────┘
                        ▼
    ┌─────────────────────────────────────────────────────┐
    │ GUARANTEED AREA SIZE←FREE AREA SIZE - ESTIMATE       │  S508
    │ ERROR VALUE                                          │
    └─────────────────────────────────────────────────────┘
                        │                                    S509
                        ▼
    ┌─────────────────────────────────────────────────────┐
    │ REMAINING RECORDABLE TIME←GUARANTEED AREA SIZE /     │
    │ TIME CONVERSION PARAMETER                            │
    └─────────────────────────────────────────────────────┘
                        │
                        ▼
    ┌─────────────────────────────────────────┐
    │ CALCULATE DISPLAY LOCATION FOR REMAINING │  S510
    │ RECORDABLE TIME DISPLAY SCREEN           │
    └─────────────────────────────────────────┘
                        │
                        ▼
    ┌─────────────────────────────────────────┐
    │ CALCULATE GRAPH WIDTH FOR ALLOCATED      │  S511
    │ AREA SIZE                                │
    └─────────────────────────────────────────┘
                        │
                        ▼
    ┌─────────────────────────────────────────┐
    │ DISPLAY REMAINING RECORDABLE             │  S512
    │ TIME DISPLAY SCREEN                      │
    └─────────────────────────────────────────┘
                        │
                        ▼
                     ( END )
```

FIG. 6

DISPLAY 5

USER INSTRUCTION RECEIVING UNIT 16

DISPLAY CONTROL UNIT 23

STORAGE UNIT 17

CPU 121

MEMORY 122

TIME CALCULATIN UNIT 22

STREAM REPRODUCING UNIT 14

VIDEO DATA

COMPRESSION UNIT 15

DATA READ /WRITE UNIT 11

REMAINING RECORDABLE TIME CALCULATION APPARATUS 2

6

EP 1 168 347 A2

FIG.7

FIG.8

800

410

401

W1

W0

REMAINING
RECORDABLE
TIME : 32

NUMBER OF
STREAMS : 3
(1) STREAM a
(2) STREAM b
(3) STREAM c

811
810
812

REMAINING
RECORDABLE TIME

EP 1 168 347 A2

FIG. 9

900

911    910

STREAM b
16 min

←—W3—→←—W2—→

←—————————W1—————————→

←———————————————————W0———————————————————→

STREAM BREAKDOWN

REPRODUCING
INSTRUCTION
RECEIVING UNIT    920

EP 1 168 347 A2

## FIG.10

```
                        ( START )

                           |
                           v
                    ╱ INSTRUCTION FOR ╲           S501
        NO  ◄───── ╱  CALCULATING REMAINING ╲
                   ╲  RECORDABLE TIME        ╱
                    ╲    RECEIVED?          ╱
                           |
                           | YES
                           v
        ┌────────────────────────────────────────────┐
        │ READ MANAGEMENT DATA FROM OPTICAL DISK      │  S502    S1001
        └────────────────────────────────────────────┘
                           |
                           v
        ┌────────────────────────────────────────────┐
        │ CALCULATE TOTAL TIME (DISK CAPACITY -       │
        │ ESTIMATE ERROR VALUE) / TIME                │
        │ COVERSION PARMETER)                         │
        └────────────────────────────────────────────┘
                           |
                           v
        ┌────────────────────────────────────────────┐
        │ SET INITIAL VALUE OF REMAINING RECORDABLE   │
        │ TIME (←TOTAL TIME )                         │  S1002
        └────────────────────────────────────────────┘
                           |
                           v
        ┌────────────────────────────────────────────┐
        │ STREAM COUNTER : SET INITIAL VALUE OF N (←1)│  S504
        └────────────────────────────────────────────┘
                           |
                           v
                    ╱ TOTAL NUMBER ╲    S505        NO
                   ╱  OF STREAM ≧ N  ╲ ──────────┐
                    ╲               ╱            │
                           |                     │
                           | YES                 │
                           v                     │
        ┌────────────────────────────────────────────┐
        │ UPDATE REMAINING RECORDABLE TIME            │  S1003
        │ (←REMAINING RECORDABLE TIME -               │
        │  RUNNING TIME OF Nth STREAM)                │
        └────────────────────────────────────────────┘
                           |
                           v
              ┌──────────────────────┐
              │ UPDATE N(←N+1)       │  S507
              └──────────────────────┘
                           |
                           v
        ┌────────────────────────────────────────────┐
        │ CALCULATE DISPLAY LOCATION FOR              │  S510
        │ REMAINING RECORDABLE TIME DISPLAY SCREEN    │
        └────────────────────────────────────────────┘
                           |
                           v
        ┌────────────────────────────────────────────┐
        │ CALCULATE GRAPH WIDTH FOR ALLOCATED AREA SIZE│ S1004
        └────────────────────────────────────────────┘
                           |
                           v
        ┌────────────────────────────────────────────┐
        │ DISPLAY REMAINING RECORDABLE TIME DISPLAY   │  S1005
        │ SCREEN                                      │
        └────────────────────────────────────────────┘
                           |
                           v
                        ( END )
```

FIG.11                                          1100

| "MGMT" | | |
|---|---|---|
| 5.0GB | | |
| "a2" | 20min | 1 |
| "b2" | 16min | 0.5 |
| "c2" | 30min | 1 |

↑ 711    ↑ 712    ↑ 1111

## FIG.12

(a)

ROOT
├── dvd_rtav
│   ├── vr_mangr.ifo
│   └── vr_movie.vro

| Lead_in | Volume | | Lead_out |

DVD_RAM1200

(b)

vr_mangr.ifo

| RTR_VMGI |
| M_AVFIT |
| S_AVFIT |
| ORG_PGCI |
| UD_PGCI |
| TXTDT_MG |
| MNFIT |

| PGC_GI |
| PGI # 1 |
| ⋮ |
| PGI # m |
| CI_SRP # 1 |
| CI_SRP # n |
| CI # 1 |
| ⋮ |
| CI # n |

| PG_TY |
| C_Ns |
| PRM_TXTI |
| IT_TXT_SRPN |
| REP_PICTI |

| CHRS |
| IT_TXT_SRP_Ns |
| TXTDT_MG_EA |

| TXTDTI |
| IT_TXT_SRP # 1 |
| ⋮ |
| IT_TXT |
| ⋮ |

| IT_TXT_SA |
| IT_TXT_SZ |

(c)

IT_TXT

1232

1220      1220

1230      1233

1231

| TAG | | SIZE |
|---|---|---|
| "BR" | "S" | 0.05 |
| | | |

1200a

| TAG | | SIZE |
|---|---|---|
| "BR" | "L" | 0.025 |
| | | |

1200b

| TAG | | SIZE |
|---|---|---|
| "BR" | "X" | 0.1 |
| | | |

1200c

| TAG | | SIZE |
|---|---|---|
| "BR" | "F" | 0.075 |
| | | |

1200d

1200

FIG.13

DISPLAY 5

USER INSTRUCTION RECEIVING UNIT 16

DISPLAY CONTROL UNIT 23

STORAGE UNIT 17

CPU 121

MEMORY 122

TIME CALCULATION UNIT

32

STREAM REPRODUCING UNIT 14

VIDEO DATA

COMPRESSION UNIT 15

DATA READ/ WRITE UNIT 11

6

REMAINING RECORDABLE TIME CALCULATION APPARATUS

3

EP 1 168 347 A2

FIG.14

21

| STREAM a | |
|----------|--|
| STREAM b | |
| STREAM c | |

140

| "MGMT" | | | 210 |
|--------|--|--|-----|
| 5.0 GB | | | 211 |
| "a" | 1.03 GB | 20min | 141a |
| "b" | 0.80 GB | 16min | 141b |
| "c" | 1.52 GB | 30min | 141c |

1411    1412    1413

6

EP 1 168 347 A2

FIG. 15

```
          ┌─────────────┐
          │    START    │
          └─────────────┘
                 │
                 ▼
      ┌──────────────────────────┐
 NO   │ INSTRUCTION FOR CALCULATING│   S501
◄─────┤   REMAINING RECORDABLE     │
      │     TIME RECEIVED?         │
      └──────────────────────────┘
                 │ YES
                 ▼
   ┌────────────────────────────────────┐
   │ READ MANAGEMENT DATA FROM OPTICAL DISK │  S502
   └────────────────────────────────────┘
                 │
                 ▼
   ┌────────────────────────────────────┐
   │ CALCULATE A FIRST REMAINING RECORDABLE │  S1501
   │ TIME BASED ON SIZE OF FREE AREA        │
   └────────────────────────────────────┘
                 │
                 ▼
   ┌──────────────────────────────────────────────┐
   │ CALCULATE A SECOND REMAINING RECORDABLE          │  S1502
   │ TIME BASED RUNNING TIME OF ALL STREAMS ON OPTICAL DISK │
   └──────────────────────────────────────────────┘
                 │
                 ▼
   ┌────────────────────────────────────┐
   │ REMAINING RECORDABLE TIME←MIN         │  S1503
   │  (A FIRST REMAINING RECORDABLE        │
   │ TIME, A SECOND REMAINING RECORDABLE TIME) │
   └────────────────────────────────────┘
                 │
                 ▼
   ┌────────────────────────────────────┐
   │ CALCULATE DISPLAY LOCATION FOR REMAINING │  S510
   │ RECORDABLE TIME DISPLAY SCREEN          │
   └────────────────────────────────────┘
                 │
                 ▼
   ┌────────────────────────────────────────┐
   │ CALCULATE GRAPH WIDTH FOR ALLOCATED AREA SIZE │  S1004
   └────────────────────────────────────────┘
                 │
                 ▼
   ┌──────────────────────────────────────────┐
   │ DISPLAY REMAINING RECORDABLE TIME DISPLAY SCREEN │  S1005
   └──────────────────────────────────────────┘
                 │
                 ▼
          ┌─────────────┐
          │     END     │
          └─────────────┘
```

## FIG.16

```
1630
┌─────────────────────────────┐
│ REMAINING                   │
│ RECORDABLE TIME :           │
│  ** min                     │
└─────────────────────────────┘
            ↑
                              1620
┌─────────────────────────────┐
│ REMAINING RECORDABLE        │
│ TIME CALCULATION MEANS      │
└─────────────────────────────┘
            ↑
                         1610
┌─────────────────────────────┐
│      DATA READ MEANS        │◄───── RECORDING
└─────────────────────────────┘        MEDIUM

RECORDING APPARATUS

1600
```